# FASCICULE DE BREVET EUROPEEN

(11) **EP 1 651 435 B1**
(45) Date de publication et mention de la délivrance du brevet: **02.09.2015**
(21) Numéro de dépôt: 04767700.0
(22) Date de dépôt: 16.07.2004
(51) Int. Cl.: B32B 18/00, C04B 35/83, C04B 41/52, C04B 41/89, C04B 35/571, C04B 111/00, C04B 111/40, C04B 111/80

(54) **STRUCTURE COMPOSITE THERMOSTRUCTURALE A GRADIENT DE COMPOSITION ET SON PROCEDE DE FABRICATION**
HOCHTEMPERATURBESTÄNDIGE VERBUNDSTRUKTUR MIT GRADIENTENZUSAMMENSETZUNG UND HERSTELLUNGSVERFAHREN DAFÜR
COMPOSITION GRADIENT THERMOSTRUCTURAL COMPOSITE STRUCTURE AND METHOD FOR THE PRODUCTION THEREOF

(30) Priorité: 18.07.2003 FR 0308787
(43) Date de publication de la demande: 03.05.2006
(73) Titulaire: HERAKLES, 33185 Le Haillan (FR)
(72) Inventeur: THEBAULT, Jacques, F-33200 BORDEAUX (FR); DAVID, Laurent, F-33290 BLANQUEFORT (FR)
(74) Mandataire: Desormiere, Pierre-Louis
(86) Numéro de dépôt international: PCT/FR2004/001876
(87) Numéro de publication internationale: WO 2005/009921

(56) Documents cités:
- EP-A- 0 735 387
- EP-A- 1 184 356
- DE-A- 2 512 597
- US-A- 4 856 887

## Description

### Arrière plan de l'invention

Les matériaux composites thermostructuraux sont connus pour leurs bonnes propriétés mécaniques et leur capacité à conserver ces propriétés à température élevée. Ils comprennent les matériaux composites carbone/carbone (C/C) formés d'un renfort en fibres de carbone densifié par une matrice en carbone et les matériaux composites à matrice céramique (CMC) formés d'un renfort en fibres réfractaires (carbone ou céramique) densifiés par une matrice au moins partiellement céramique. Des exemples de CMC sont les composites C/SiC (renfort en fibres de carbone et matrice en carbure de silicium), les composites C/C-SiC (renfort en fibres de carbone et matrice comprenant une phase carbone, généralement au plus près des fibres, et une phase carbure de silicium) et les composites SiC/SiC (fibres de renfort et matrice en carbure de silicium). Une couche d'interphase peut être interposée entre fibres de renfort et matrice pour améliorer la tenue mécanique du matériau.

En raison de leurs propriétés, les matériaux composites thermostructuraux trouvent des applications dans divers domaines, pour réaliser des pièces devant être soumises à des contraintes thermomécaniques importantes, par exemple dans les domaines aéronautique et spatial. Toutefois, dans tels domaines, bien que les matériaux composites permettent déjà de réaliser des pièces ayant une bonne résistance mécanique pour un poids réduit en comparaison avec les métaux par exemple, la masse de ces pièces n'est pas négligeable et influe sur les performances des systèmes. Par conséquent, il existe toujours une demande pour des pièces ou assemblages thermostructuraux plus légers sans dégradation des performances mécaniques.

Une solution consiste à former des structures thermostructurales allégées, par exemple de type cellulaire comme des nids d'abeille, plutôt que des structures massives afin de conserver une bonne tenue mécanique avec moins de matière. Ceci implique de pouvoir fabriquer des structures composites thermostructurales de forme complexe avec des parois minces.

Lorsque l'on souhaite obtenir une pièce de forme particulière en matériau composite thermostructural, on procède en général de la façon suivante. Une préforme est réalisée par mise en forme du renfort fibreux. La préforme, éventuellement maintenue en forme au moyen d'un outillage, est ensuite densifiée. On obtient ainsi une pièce en matériau composite rigide d'une forme déterminée.

Les procédés usuels de densification sont le procédé par voie liquide et le procédé par voie gazeuse.

Le procédé par voie liquide consiste à imprégner préalablement la préforme d'une composition liquide contenant un précurseur du matériau de la matrice. Le précurseur se présente habituellement sous forme d'un polymère, tel qu'une résine, éventuellement dilué dans un solvant. La transformation du précurseur en carbone ou céramique est réalisée par traitement thermique, après élimination du solvant éventuel et réticulation du polymère. Plusieurs cycles d'imprégnation successifs peuvent être réalisés pour parvenir au degré de densification souhaité. A titre d'exemple, des précurseurs liquides de carbone peuvent être des résines à taux de coke relativement élevé, telles que des résines phénoliques, tandis que des précurseurs liquides de céramique, notamment à base de SiC ou Si₃N₄, peuvent être des résines de type polycarbosilane (PCS) ou polytitanocarbosilane (PTCS).

Le procédé par voie gazeuse consiste dans l'infiltration chimique en phase vapeur. La préforme fibreuse correspondant à une pièce à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au contact des fibres, d'un matériau solide résultant d'une décomposition d'un constituant de la phase gazeuse ou d'une réaction entre plusieurs constituants. A titre d'exemple, des précurseurs gazeux du carbone peuvent être des hydrocarbures donnant le carbone par craquage, et un précurseur gazeux de céramique, notamment de SiC, peut être du méthyltrichlorosilane (MTS) donnant du SiC par décomposition du MTS. Dans ce cas, les outillages éventuellement utilisés pour maintenir la préforme dans une configuration déterminée doivent être adaptés pour laisser passer les gaz dans la préforme à traiter.

Cependant, ces méthodes de fabrication ne permettent pas d'obtenir directement des pièces complexes comportant des parties très minces de forme et de dimensions précises.

Les parties de détail peuvent être usinées dans la pièce après densification. Dans ce cas, pour conserver une raideur suffisante dans les parties minces, le matériau composite utilisé doit être très résistant, c'est-à-dire avoir une densité importante. A cet effet, on peut utiliser des composites à matrice céramique telle que du carbure de silicium qui confère une raideur importante au matériau même lorsqu'il présente une faible épaisseur. Toutefois, le gain de poids obtenu par enlèvement de matière est limité par la densité requise du matériau utilisé.

D'autre part, l'usinage de matériaux très durs tels que le carbure de silicium nécessite l'utilisation d'outils spécifiques capables d'attaquer de tels matériaux avec précision, ce qui augmente les difficultés et les coûts de fabrication.

Le document EP 0 735 387 décrit un procédé d'élaboration d'une structure allégée en carbure de silicium du type à âme en nid d'abeilles.

Le document US 4 856 887 décrit une âme poreuse de SiC avec une porosité de 95% contenant des deux côtés 2 couches dense de SiC.

### Objet et résumé de l'invention

La présente invention vise à remédier aux inconvénients précités et à fabriquer une structure composite thermostructural qui permet de réaliser des formes complexes avec des parois minces à la fois raides et légères.

Ces buts sont atteints grâce à une structure composite thermostructurale à gradient de composition dans le sens de l'épaisseur de la structure formée d'une âme poreuse en matériau réfractaire ayant un taux volumique de porosité supérieur ou égal à 80%, l'âme étant située entre deux couches intermédiaires comprenant une partie du matériau réfractaire, une phase céramique ainsi qu'une charge solide réfractaire, deux peaux extérieures en céramique monolithique recouvrant les couches intermédiaires. Les couches intermédiaires et l'âme poreuse, d'une part, et les peaux en céramique et les couches intermédiaires, d'autre part, s'interpénètrent partiellement de manière à encrer les couches intermédiaires dans l'âme poreuse et les peaux en céramique dans lesdites couches intermédiaires.

Ainsi, la structure de l'invention présente l'avantage d'être légère tout en présentant une raideur importante quelles que soient ses dimensions. Cela vient du fait que la structure présente un gradient de densité en épaisseur. En effet, la structure présente une densité très faible en son centre et une densité beaucoup plus importante au voisinage de sa surface. Par conséquent, la structure présente en surface la raideur d'une céramique tout en ayant une densité moyenne bien inférieure à celle d'une céramique pure ou d'un matériau composite à matrice céramique. De plus, la structure présente une bonne tenue mécanique puisque la partie présentant le module de Young le plus élevé, à savoir la peau de céramique, se trouve en surface et que cette peau est solidement implantée dans la couche intermédiaire qui est elle-même accrochée sur une partie de l'âme.

Le couple densité moyenne/raideur de la structure peut être ajusté en jouant sur les différentes épaisseurs des couches. Typiquement, la structure de l'invention présente une densité apparente inférieure à 1.

La structure selon l'invention peut être utilisée pour toutes sortes de réalisations. Elle peut comprendre des alvéoles dont les parois forment des raidisseurs pour former une structure allégée et résistante. Les raidisseurs peuvent avoir une épaisseur de paroi inférieure à 1 mm et jusqu'à 0,5 mm. Afin d'alléger encore la structure, les raidisseurs peuvent présenter des portions évidées.

Le matériau constitutif de l'âme peut être tout type de matériau réfractaire à condition que celui-ci soit poreux et usinable. Les matériaux utilisés peuvent être par exemple du carbone, du carbure de silicium, de l'alumine... Ils peuvent se présenter sous différentes formes telles qu'une mousse ou un matériau composite comprenant un renfort fibreux consolidé par une matrice. Dans le cas d'un renfort en fibres de carbone, les fibres sont de préférence des fibres de carbone de type ex-rayonne, ce qui permet de limiter les contraintes dues aux variations dimensionnelles différentielles en raison de la présence dans la structure de matériaux ayant différents coefficients de dilatation thermique. La fissuration des peaux céramiques monolithiques peut être ainsi évitée.

La structure peut en outre comprendre une surface polie intégralement formée avec les raidisseurs. On obtient ainsi un miroir ultra-léger ayant une inertie très faible. De plus, en raison de la nature des matériaux, le miroir a une inertie thermique faible et une conductivité thermique élevée en raison de la présence de SiC en surface, ce qui permet d'éviter la présence de points chauds dans la structure et d'avoir des déformations homothétiques garantissant un guidage précis même en cas de variation de température. Des miroirs de très grandes dimensions et d'une masse relativement faible peuvent être ainsi fabriqués.

La céramique de la peau peut être composée, entre autre, de carbure de silicium (SiC), de bore (B) ou bien de carbure de bore (B₄C).

L'invention a également pour objet un procédé de fabrication d'une structure composite thermostructurale stratifiée comprenant les étapes suivantes:
a) usinage d'une préforme dans une pièce de matériau réfractaire poreux, la préforme ayant un taux volumique de porosité supérieur ou égal à 80%,
b) application sur toutes les surfaces accessibles de la préforme d'une composition liquide contenant un polymère précurseur de céramique et une charge solide réfractaire et transformation du polymère précurseur en céramique pour réduire la porosité à la surface de la préforme,
c) formation d'un dépôt de céramique par infiltration chimique en phase vapeur de manière à former une peau de céramique sur toutes les surfaces de la préforme.

Ainsi, grâce au procédé de l'invention, des structures rigides de formes complexes avec des éléments très minces peuvent être facilement réalisées. En effet, du fait de sa porosité importante, le matériau composite de départ peut être facilement usiné dans de très petites dimensions et de façon précise. On dispose ainsi dès l'origine d'une préforme ayant une forme voisine de la forme finale de la pièce à réaliser.

La couche intermédiaire sert non seulement de barrière pour préserver la porosité de l'âme de la structure lors de l'infiltration gazeuse mais aussi de couche d'implantation pour ancrer le dépôt de céramique et réaliser une liaison mécanique entre la peau de céramique et l'âme poreuse.

L'usinage de la préforme est réalisée suivant la forme et les dimensions de la pièce que l'on souhaite réaliser. L'usinage peut comprendre l'évidement d'alvéoles dans la pièce en matériau composite pour former des raidisseurs.

L'opération d'usinage peut en outre comprendre la formation d'une surface sensiblement plane qui est ensuite polie après l'étape d'infiltration chimique en phase vapeur pour former une surface optique. On obtient ainsi un miroir ultra léger dont la surface peut être intégralement formée avec des raidisseurs, ce qui lui confère une masse très faible.

Le matériau constitutif de la préforme peut être tout type de matériau réfractaire à condition que celui-ci soit poreux et usinable. Les matériaux utilisés peuvent être par exemple du carbone, du carbure de silicium, de l'alumine... Ils peuvent se présenter sous différentes formes telles qu'une mousse ou un matériau composite comprenant un renfort fibreux consolidé par une matrice.

Dans le cas d'un matériau comprenant à renfort fibreux, les fibres du renfort peuvent être des fibres de carbone de type ex-rayonne, ce qui permet de limiter les contraintes dues aux variations dimensionnelles différentielles en raison de la présence dans la structure de matériaux ayant différents coefficients de dilatation thermique.

La composition liquide comprend de préférence un solvant polymère du précurseur de céramique, la quantité de solvant étant choisie notamment pour ajuster la viscosité de la composition.

La composition liquide peut être appliquée à la brosse, ou pinceau, ou par autre procédé, par exemple par pistolettage. Elle peut être appliquée en plusieurs couches successives. Après chaque couche, on peut procéder à une réticulation intermédiaire du polymère précurseur de céramique.

Le matériau céramique obtenu par voie liquide peut être SiC, le polymère précurseur de céramique pouvant alors être choisi parmi le PCS et le PTCS, précurseurs de SiC ou encore parmi des silicones. D'autres matériaux céramiques peuvent être obtenus par voie liquide tels que du nitrure de silicium Si₃N₄ à partir de polysilazane pyrolysé sous gaz ammoniac ou du nitrure de bore BN à partir de polyborazine.

La charge solide peut comporter une poudre réfractaire, notamment une poudre de céramique telle qu'une poudre de carbure (notamment de SiC), de nitrure ou de borure. La granulométrie de la poudre est choisie de manière que les grains aient une dimension moyenne de préférence inférieure à 100 microns, par exemple comprise entre 5 et 50 microns.

La granulométrie est en effet choisie de manière que les grains de poudre aient une dimension suffisamment petite pour pénétrer dans la porosité superficielle du matériau composite, mais toutefois pas trop petite pour permettre une diffusion superficielle de gaz dans la préforme lors de l'étape subséquente d'infiltration chimique en phase vapeur. De la sorte, un bon accrochage du revêtement formé lors de cette étape ultérieure d'infiltration chimique en phase vapeur peut être obtenu par ancrage dans la porosité superficielle du matériau. Selon une particularité avantageuse du procédé, on utilise un mélange de poudres céramiques ayant au moins deux granulométries moyennes différentes afin de répondre à ces conditions.

La quantité en masse de charge solide dans la composition liquide est de préférence comprise entre 0,4 et 4 fois la quantité en masse de polymère précurseur de céramique.

Le dépôt formé par infiltration chimique en phase vapeur peut être du carbure de silicium (SiC) mais aussi du bore (B) ou du carbure de bore (B₄C). L'infiltration chimique en phase vapeur peut être réalisée à température constante.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est un ordinogramme illustrant des étapes successives d'un mode de mise en oeuvre d'un procédé conforme à l'invention;
- les figures 2 et 3 sont des vues en perspective d'un exemple d'une préforme selon un premier mode de réalisation d'une structure selon l'invention,
- la figure 4 est une vue en coupe d'un premier type de raidisseur d'une structure conforme à l'invention,
- la figure 5 est une vue en coupe d'un deuxième type de raidisseur d'une structure conforme à l'invention,
- la figure 6 est une représentation schématique partielle en coupe de la structure selon l'invention,
- les figures 7A, 7B et 7C sont des courbes montrant respectivement l'évolution de la densité, du taux de carbure de silicium et du taux de carbone rencontrés dans l'épaisseur de la structure de la figure 6,
- la figure 8 est une photographie montrant à l'échelle un exemple de module de miroir obtenu suivant le procédé de l'invention,
- la figure 9 est une photographie montrant à l'échelle un autre exemple de module de miroir obtenu suivant le procédé de l'invention,
- la figure 10 est une représentation schématique d'un deuxième mode de réalisation d'une structure selon l'invention,
- la figure 11 est une vue en perspective d'un troisième mode de réalisation d'une structure selon l'invention,
- la figure 12 est une vue en coupe partielle de la structure de la figure 11 montrant une opération d'usinage,
- la figure 13 est une vue en coupe partielle d'un quatrième mode de réalisation d'une structure selon l'invention.

### Description détaillée d'un mode de réalisation

Suivant les applications envisagées, la forme et les dimensions des pièces qui peuvent être obtenues avec la structure de la présente invention sont variées. Par souci de simplification, les réalisations décrites ci-dessous ne sont que quelques exemples d'applications possibles de l'invention. L'homme de l'art envisagera sans difficulté d'autres réalisations dans lesquelles les caractéristiques structurelles des pièces obtenues selon l'invention pourront être avantageusement utilisées.

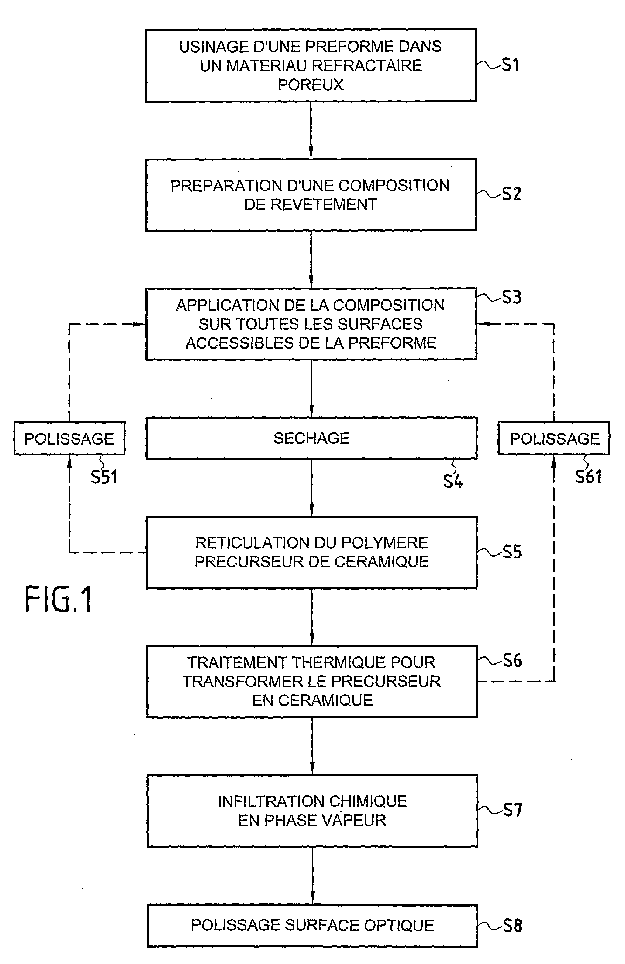

En référence à la figure 1, un mode de mise en oeuvre d'un procédé de fabrication d'une structure conforme à l'invention comprend les étapes suivantes.

La première étape (étape S1) consiste à usiner une préforme dans un matériau composite thermostructural de départ de très faible densité mais qui présente une rigidité suffisante pour permettre son usinage.

De nombreux matériaux peuvent être utilisés pour réaliser la préforme. D'une manière générale, tout matériau réfractaire, poreux, de faible densité et usinable peut être utilisé. A titre d'exemple, on peut citer les matériaux composites C/C ou C/SiC formé à partir d'un renfort fibreux ou bien des mousses de carbone ou de carbure de silicium qui présente un taux volumique de porosité supérieur ou égale à 80%.

Dans l'exemple qui va être décrit, on utilise un matériau composite carbone/carbone (C/C) formé d'un renfort de fibres de carbone pré-densifié ou consolidé par une matrice en carbone. Ce matériau peut être usiné facilement, par fraisage par exemple, ce qui permet de réaliser des formes complexes et des parois fines.

Le renfort est formé d'un feutre de fibres ayant un taux de fibre relativement faible. Les fibres sont de préférence des fibres de carbone de type ex-rayonne qui limitent les contraintes dues aux variations dimensionnelles différentielles en raison de la présence, dans la structure finale, de matériaux ayant différents coefficients de dilatation thermique. Ce type de matériau peut être approvisionné sous forme de plaques de feutre rigide comme par exemple le matériau d'isolation CVD 40 distribué par la société Calcarb Limited.

Les fibres sont liées entre elles par une matrice carbone. La consolidation du renfort peut être réalisée par voie liquide en imprégnant celui-ci d'une composition liquide contenant un précurseur de carbone et en le carbonisant ensuite à une température et une pression contrôlées.

Alternativement, la consolidation peut être réalisée par voie gazeuse. Dans ce cas, le renfort est placé dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au contact des fibres, d'un matériau solide résultant d'une décomposition d'un constituant de la phase gazeuse ou d'une réaction entre plusieurs constituants.

Quel que soit le procédé utilisé pour consolider le renfort fibreux, la densification doit être ajustée pour lier mécaniquement les fibres de carbone au moins à leurs intersections par la matrice tout en conservant un taux volumique de porosité du matériau résultant supérieur ou égal à 80%.

On obtient ainsi un matériau composite C/C poreux, tel que le CVD 40 distribué par la société Calcarb Limited, qui présente à ce stade une densité très faible comprise entre 0,2 et 0,4 tout en ayant une rigidité suffisante pour être usiné. Un tel matériau permet d'usiner des parois ayant une épaisseur inférieure à 1 mm et pouvant aller jusqu'à 0,5 mm.

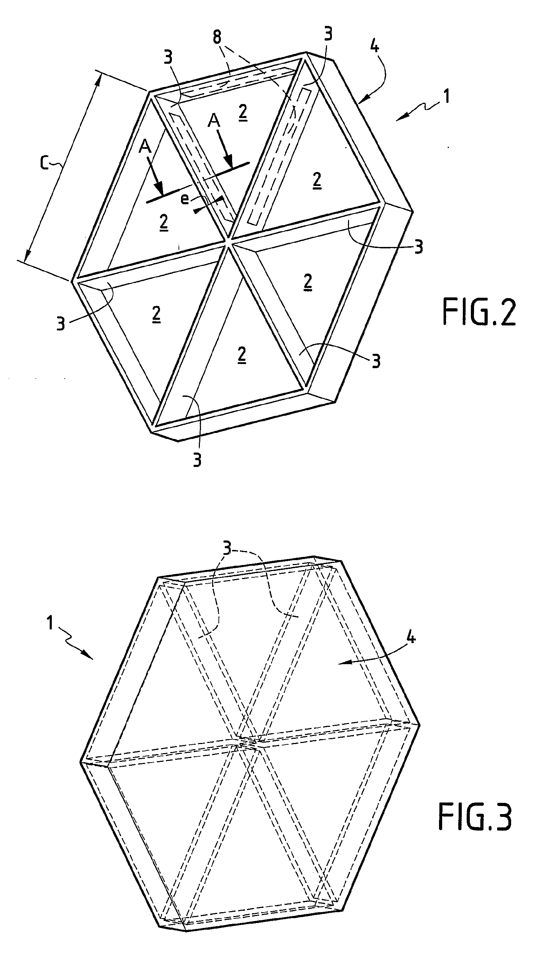

L'usinage de la préforme est réalisée directement dans le matériau composite. Les figures 2 et 3 montrent un premier exemple d'une préforme 1 destinée à la fabrication d'un miroir ultra léger. On usine tout d'abord la forme générale de la pièce dans le matériau composite C/C décrit précédemment. On usine ensuite des évidements 2 dans le matériau afin d'alléger la structure et de former des alvéoles triangulaires (figure 2). Les parois verticales restantes forment des raidisseurs 3 tandis que la partie non évidée restante forme une surface 4 sensiblement plane qui deviendra la surface optique (figure 3).

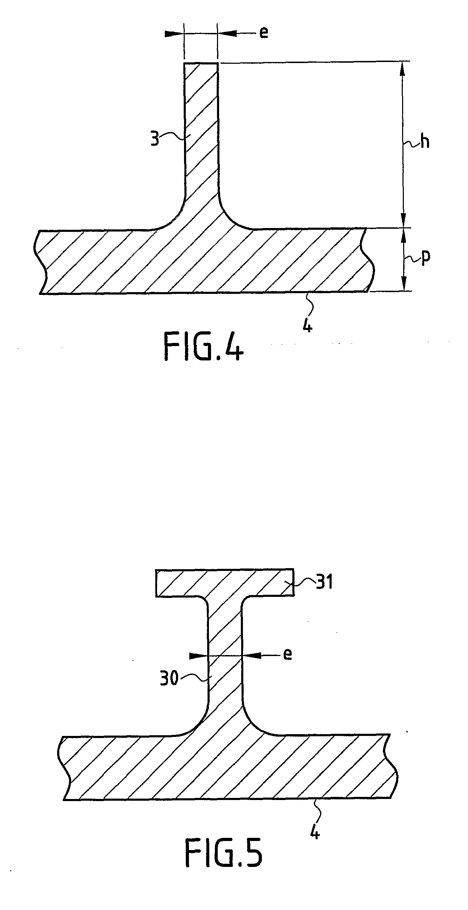

A titre d'exemple, les raidisseurs ont une longueur C comprise entre 25 et 50 mm et une épaisseur e comprise entre 0.3 et 1 mm. La figure 4 montre une vue en coupe des raidisseurs 3 de la préforme de la figure 2. Les raidisseurs 3 ont une hauteur h comprise entre 15 et 40 mm, la surface 4 présentant une épaisseur p comprise entre 1 et 5 mm. Afin d'optimiser la raideur géométrique de la structure, des raidisseurs 30, tels qu'illustrés à la figure 5, peuvent être usinés à la place des raidisseurs simples de la figure 4. Une bande de matériau 31 est conservée à l'extrémité des raidisseurs 30 qui présentent alors une section en forme de T.

D'autre part, les raidisseurs peuvent également être partiellement évidés afin d'alléger encore la préforme. Dans ce cas, comme illustré en figure 2, les parois qui forment les raidisseurs 3 peuvent présenter des ouvertures 8.

Une fois l'usinage de la préforme terminé, on prépare une composition de revêtement (étape S2) comprenant une charge solide réfractaire sous forme d'une poudre, notamment en céramique, un polymère précurseur de céramique et un solvant éventuel du polymère.

Dans le mode de réalisation décrit ici, la poudre est une poudre de SiC. Toutefois, d'autres poudres notamment en céramique peuvent être utilisées, ayant sensiblement la même granulométrie, par exemple choisies parmi des poudres de carbure (autre que SiC), nitrure ou borure, des poudres de différentes natures pouvant être mélangées.

Le matériau thermostructural étant un composite C/C, l'utilisation d'une poudre ayant un coefficient de dilatation plus faible que SiC, par exemple une poudre de Si₃N₄ peut être envisagée afin de s'adapter au matériau sous-jacent et limiter le risque de fissuration.

La granulométrie est choisie suffisamment fine pour permettre aux grains de poudre de pénétrer dans la porosité superficielle à combler du matériau composite de la préforme. La granulométrie n'est toutefois pas choisie trop fine pour permettre la diffusion des gaz dans la porosité superficielle du matériau composite lors d'une étape ultérieure d'infiltration chimique en phase vapeur. De la sorte, un bon accrochage du dépôt formé lors de cette étape ultérieure d'infiltration chimique en phase vapeur peut être obtenu par ancrage dans la porosité superficielle du matériau tout en limitant la profondeur de diffusion de l'infiltration dans le matériau.

De préférence, la taille moyenne des grains est alors choisie inférieure à 100 microns, par exemple comprise entre 5 microns et 50 microns. On pourra utiliser des poudres de granulométries différentes, les grains plus petits contribuant à une bonne réduction de la porosité superficielle et les grains plus gros contribuant à laisser des passages pour la diffusion des gaz. Par exemple, on peut utiliser des grains de taille moyenne comprise entre 5 microns et 15 microns en association avec des grains de taille moyenne comprise entre 25 microns et 50 microns, la proportion en masse de grains de plus grande taille moyenne étant par exemple au moins égale à celle des grains de plus petite taille moyenne.

Le polymère précurseur de céramique est choisi en fonction de la nature du revêtement désiré. Dans le cas d'un revêtement en SiC, le polymère est choisi par exemple parmi le polycarbosilane (PCS) et le polytitanocarbosilane (PTCS).

D'autres polymères précurseurs de céramique sont utilisables, par exemple des silicones qui sont des précurseurs de SiC (ou SiC+C, avec carbone en excès), des polysilazanes qui, pyrolysés sous gaz ammoniac, permettent d'obtenir Si₃N₄ et des polyborazines, précurseurs de BN.

On notera que la céramique constitutive des charges solides et celle dont le polymère est précurseur sont de préférence, mais non nécessairement, de même nature.

Le solvant est déterminé en fonction du polymère précurseur de céramique utilisé. Dans le cas du PCS, par exemple, le solvant peut être du xylène. D'autres solvants sont utilisables pour d'autres polymères, par exemple l'heptane, l'hexane ou l'éthanol pour des silicones.

La quantité de charge solide, par rapport à celle du polymère précurseur de céramique est choisie pour assurer un comblement satisfaisant de la porosité superficielle du matériau composite thermostructural, tout en permettant à la composition de pénétrer sur une certaine profondeur. Ainsi, la quantité en masse de charge solide est de préférence comprise entre 0,4 fois et 4 fois la quantité en masse de polymère précurseur de céramique.

La quantité de solvant utilisé est choisie pour conférer la viscosité appropriée à la composition liquide en vue de son application à la surface de la pièce. Elle permet également de régler le taux de pénétration de la composition liquide.

A titre d'exemple, une composition typique pour une composition destinée à la formation d'un revêtement SiC peut être choisie dans les limites suivantes :
Poudre de SiC (granulométrie moyenne

| | |
|---|---|
| comprise entre 5 et 50 microns) | : entre 2 et 7 parties en poids |
| PCS (précurseur de SiC) | : entre 1 et 3 parties en poids |
| Xylène (solvant du PCS) | : entre 2 et 5 parties en poids |

La composition liquide est appliquée sur toutes les surfaces accessibles de la pièce (étape S3) afin de recouvrir entièrement cette dernière.

L'application peut être simplement réalisée à la brosse, ou au pinceau. On pourra utiliser d'autres méthodes, par exemple le pistollettage.

Après séchage (étape S4), par exemple à l'air ou en étuve, pour éliminer le solvant, on procède à la réticulation du polymère précurseur de céramique (étape S5). La réticulation peut être réalisée par traitement thermique. Dans le cas par exemple du PCS, la température est progressivement élevée jusqu'à un palier d'environ 350°C.

Le polymère réticulé est soumis à un traitement thermique aux fins de céramisation (étape S6). Dans le cas du PCS, la transformation en SiC est réalisée en élevant progressivement la température jusqu'à un palier d'environ 900°C.

Plusieurs couches successives de composition liquide peuvent être appliquées. Après application de chaque couche, on procède de préférence au moins au séchage de la composition et à la réticulation du polymère précurseur de céramique. La céramisation peut être réalisée simultanément pour toutes les couches. D'autre part, un pré-polissage mécanique (abrasion) peut être réalisé après chaque application entre deux réticulations (étape S51) ou céramisations (étape S61) afin que chaque couche présente une épaisseur uniforme.

Bien entendu, les conditions de réticulation et de céramisation pourront être différentes avec d'autres précurseurs de céramiques, ces conditions ne présentant aucun caractère original.

La préforme comprend alors sur toutes ses surfaces externes une couche de revêtement qui obture au moins partiellement les macro-porosités du matériau de la préforme sur une profondeur limitée à partir de la surface de la pièce. La pièce comprend ainsi une couche de porosité plus faible au voisinage de sa surface en comparaison avec sa porosité initiale qui est toujours présente au coeur de la pièce et qui forme l'âme de la structure. Cette couche de revêtement intermédiaire constitue une barrière qui va limiter la diffusion des gaz pour préserver la porosité de l'âme et permettre la formation d'un dépôt en surface lors de l'étape d'infiltration chimique.

Après céramisation, on procède à un dépôt de céramique par infiltration chimique en phase vapeur (étape S7) sur toutes les surfaces externes de la pièce. Ce dépôt permet de combler progressivement la porosité résiduelle, de consolider l'ensemble formé par la phase issue de la réticulation du précurseur et la charge solide, et de former un revêtement uniforme de céramique qui forme une peau de céramique sur toutes les surfaces externes de la pièce. Cette peau confère la raideur nécessaire à l'ensemble de la structure.

L'infiltration est réalisée dans un four dans lequel est admis un précurseur gazeux de céramique, notamment de SiC tel que du méthyltrichlorosilane (MTS) donnant du SiC par décomposition du MTS. Le SiC monolithique ainsi obtenu a un module d'Young d'environ 420 GPa ce qui permet d'avoir une raideur importante à la surface de la pièce. Toutefois, d'autres précurseurs gazeux de céramiques peuvent être utilisés en fonction de la raideur souhaitée ou d'autres propriétés.

Les natures des phases gazeuses réactionnelles et conditions de pression et de température nécessaires pour obtenir des dépôts de céramiques diverses par infiltration chimique en phase vapeur sont bien connues en elles-mêmes.

La diffusion du précurseur gazeux dans la préforme pour y former la matrice par dépôt, au contact des fibres, se fait essentiellement au niveau de la couche de revêtement. En effet, en raison de leur faible taille et de leur nombre réduit à cet endroit, les porosités sont rapidement colmatées par le dépôt de matrice. Par conséquent, la diffusion des gaz plus profondément dans le matériau est entravée et un dépôt se forme alors à la surface de la pièce. Ce dépôt est solidement ancré dans la porosité initiale de la couche de revêtement, elle-même ancrée dans le matériau de l'âme de la structure.

Du fait que la rugosité initiale de la pièce a été en grande partie compensée, on peut obtenir un revêtement d'aspect lisse sans nécessiter une épaisseur importante de dépôt. Cette épaisseur est de préférence inférieure à 100 microns, par exemple comprise entre 50 microns et 100 microns. En outre, le processus d'infiltration chimique en phase vapeur permet l'obtention d'un dépôt d'épaisseur uniforme contrôlable, d'où la possibilité de maîtriser précisément la dimension finale de la pièce.

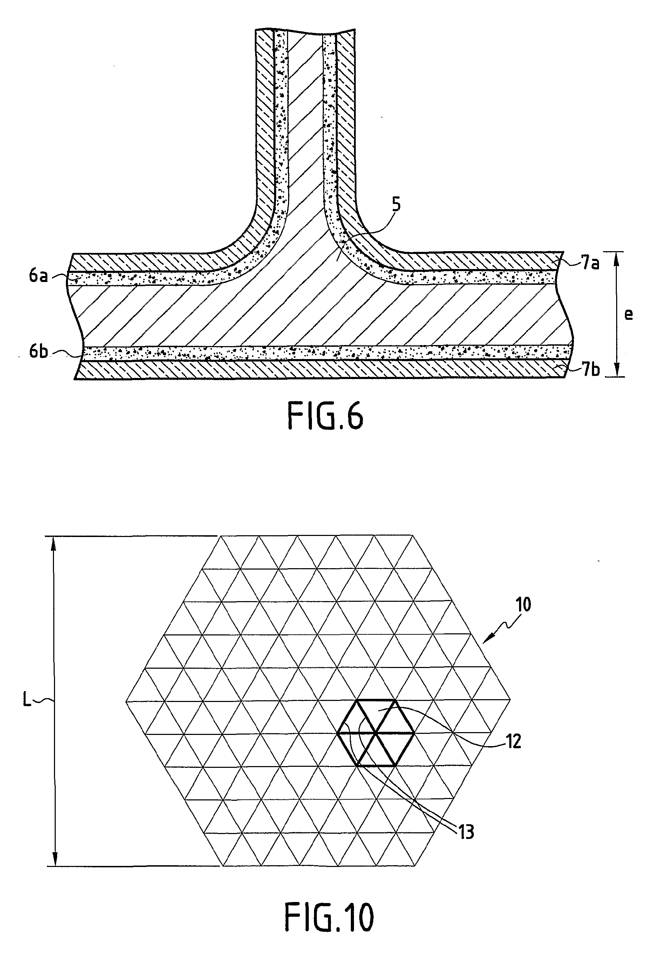

Comme le montre très schématiquement la figure 6 qui reprend la vue en coupe de la figure 4, on obtient alors une structure stratifiée qui comprend une âme 5 essentiellement en matériau composite C/C poreux en sandwich entre deux couches intermédiaires 6a et 6b comprenant principalement une partie du matériau composite C/C dont la matrice est composée en outre d'une phase céramique et la charge solide, et deux couches ou peaux en céramique 7a et 7b.

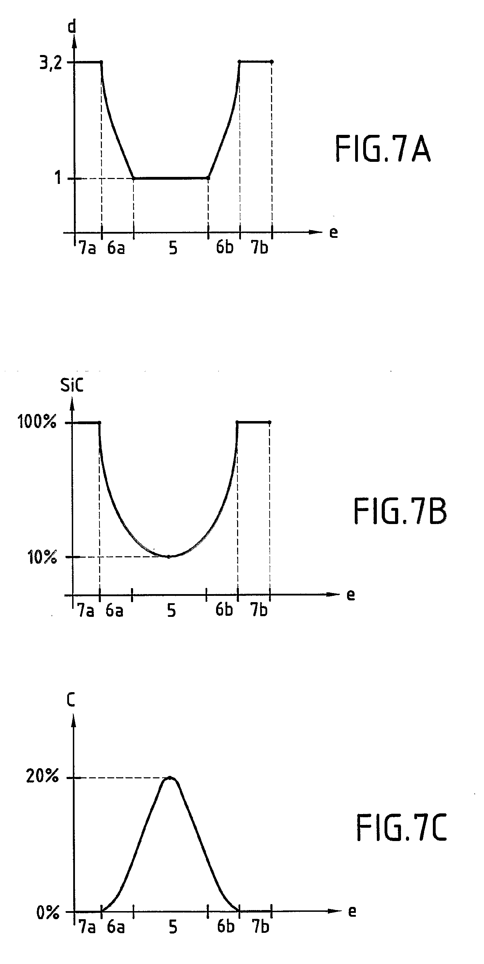

La structure présente un gradient de densité qui augmente de son âme vers sa surface comme représenté par la figure 7A qui montre l'évolution de la densité d de la structure en fonction de la nature des couches rencontrées dans l'épaisseur e de la structure. Dans l'exemple considéré, l'âme 5 présente une densité moyenne de 0,5 et un module de Young autour de 1 GPa. La couche intermédiaire 6 présente une densité moyenne d'environ 2 pour un module de Young de 200 GPa. La peau céramique 7 a une densité moyenne de 3,2 et un module de Young de 420 GPa.

La structure obtenue présente un gradient de composition dans le sens de l'épaisseur e. Les figures 7B et 7C montrent l'évolution du taux de SiC et de carbone rencontrés dans le sens de l'épaisseur e de la structure du mode de réalisation décrit ici.

La structure ainsi obtenue présente une densité apparente faible, inférieure ou égale à 1, tout en ayant une raideur importante conférée par la peau en céramique. Le couple densité/raideur de la structure peut être ajusté en modifiant l'épaisseur de chacune des couches.

La facilité d'usinage du matériau de départ permet de réaliser des formes complexes et variées sans avoir besoin de recourir à des outillages spéciaux. Des raidisseurs très minces peuvent être réalisés grâce à ce choix de matériau.

Ainsi, la structure selon l'invention permet de fabriquer des parois très minces qui sont à la fois raides et légères.

Dans l'exemple de la figure 2, la préforme comprend une surface sensiblement plane qui est destinée à former une surface optique. Après l'infiltration chimique en phase vapeur (étape S7), on obtient un dépôt de céramique uniforme d'aspect lisse sur la surface considérée correspondant ici à la couche 7b. La surface de la couche 7b est alors polie (étape S8) pour lui donner un aspect miroir. Un état de surface de l'ordre de 5 Å après polissage peut être obtenu.

De façon optionnelle, après la réticulation (étape S5) ou la céramisation (étape S6), on peut procéder à un arasage de la surface (étape S51 ou S61) pour revenir à la géométrie initiale de celle-ci. L'arasage peut être réalisé par polissage, le revêtement étant friable à ce stade de la fabrication.

Ainsi, conformément à la présente invention, il est possible de réaliser des miroirs optiques ultra-légers performants qui comprennent une surface optique intégralement formée avec le reste de la structure, notamment les raidisseurs.

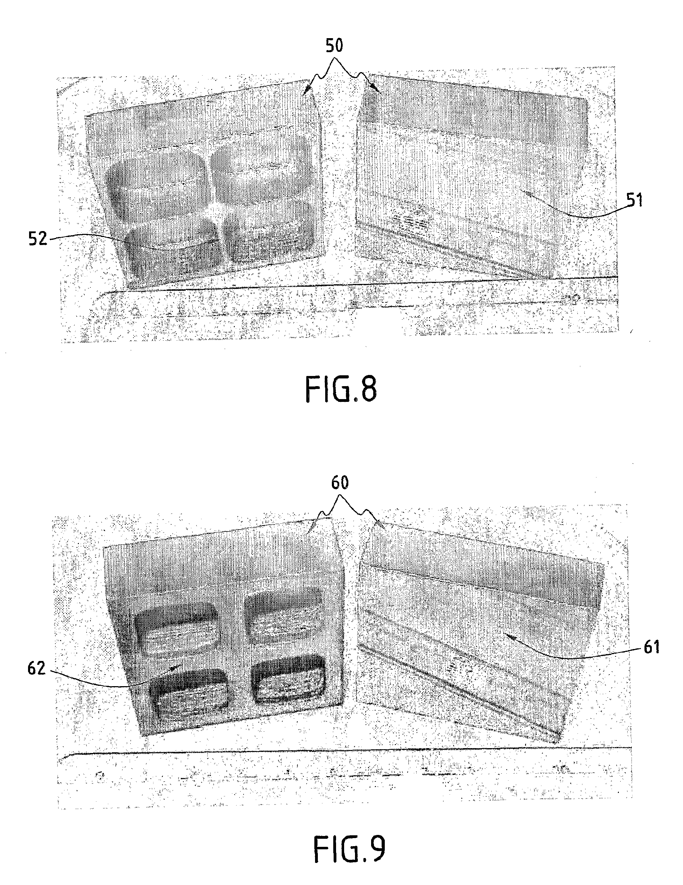

Les figures 8 et 9 montrent des exemples de miroirs ultra légers réalisés à partir du procédé de l'invention décrit précédemment. La figure 8 montre un premier type de miroir 50 qui présente une surface optique 51 obtenue par polissage du dépôt de céramique et qui comprend, du côté opposé, des raidisseurs simples 52 ayant une épaisseur voisine du millimètre. La figure 9 illustre un autre type de miroir 60 comprenant également une surface optique 61 mais qui diffère en ce qu'il comprend des raidisseurs 62 en forme de T tels que ceux illustrés à la figure 5.

A titre d'exemple, grâce à la structure selon l'invention, des miroirs d'un diamètre de l'ordre du mètre ayant une masse de seulement 6 kg, raidisseurs compris, peuvent être réalisés. Du fait de la conductivité thermique élevée conférée par les peaux en céramique, notamment en SiC, les déformations restent homothétiques en présence de changements de températures garantissant un guidage du miroir précis malgré des conditions d'utilisation variables en température.

Suivant la même méthode de fabrication, des miroirs de très grandes dimensions, tels que ceux destinés à l'observation, peuvent être réalisés. Comme le montre la figure 10, de tels miroirs sont fabriqués à partir d'une structure 10 qui correspond à une multiplication de la structure représentée en figure 2. Pour cela, on peut usiner des alvéoles triangulaires 12 pour former des raidisseurs 13 ayant une longueur et une épaisseur adaptées aux dimensions finales du miroir. Alternativement, le miroir de grande dimension peut être obtenu par assemblage d'une pluralité de petits modules, tels que ceux de la figure 2, qui sont fixés les uns aux autres par PCS et co-infiltration.

A titre d'exemple, il est possible de fabriquer des miroirs d'une largeur L supérieure au mètre qui présente une masse volumique de l'ordre de 8 kg/m², ce qui permet d'obtenir une masse totale relativement faible tout en ayant une bonne tenue mécanique malgré des dimensions importantes.

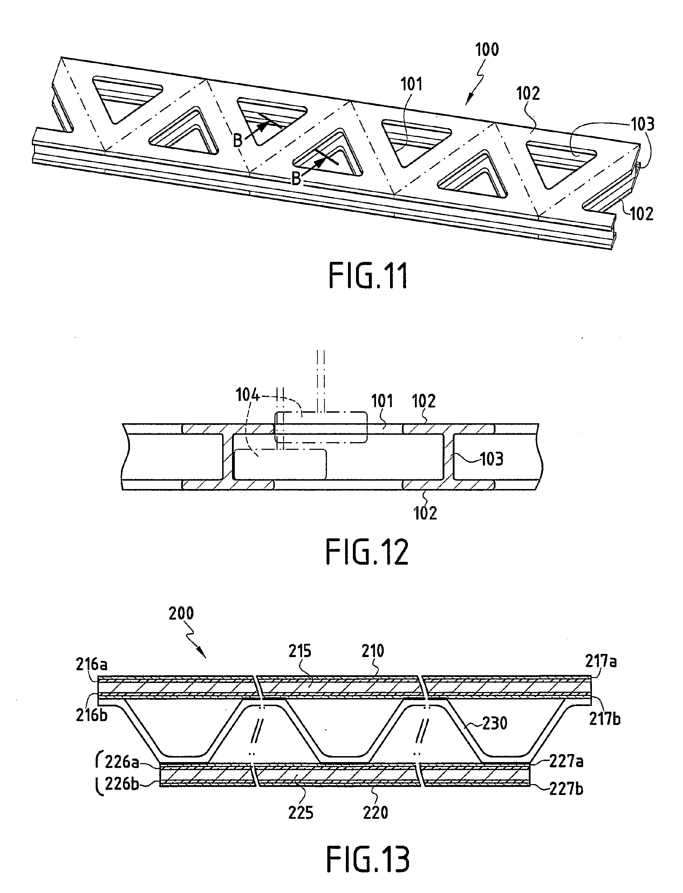

La facilité d'usinage du matériau C/C de départ permet de réaliser des formes variées et complexes. Les figures 11 et 12 illustrent la réalisation d'une préforme 100 d'une poutre à structure alvéolaire fabriquée conformément à la structure de l'invention. L'opération d'usinage consiste à évider le matériau avec une fraise 104 pour former une pluralité d'alvéoles triangulaires 101 et à évaser l'intérieur de ces alvéoles pour former des raidisseurs 103 de type double T 102. On obtient ainsi une poutre allégée en matière qui conserve néanmoins une bonne raideur. La mise en oeuvre des étapes suivantes de la fabrication, à savoir application de la couche de revêtement, séchage, réticulation, céramisation et infiltration chimique en phase vapeur, est la même que celle décrite précédemment.

De nombreuses autres réalisations peuvent être envisagées, comme la réalisation de nids d'abeille à structure hexagonale par exemple.

En outre de sa raideur et de sa légèreté, la structure de la présente invention présente encore d'autres avantages. En effet, la structure est étanche grâce à la peau de céramique qui l'enveloppe. De plus, la structure constitue un bon conducteur thermique. Par conséquent, la structure de l'invention peut être utilisée pour la fabrication d'échangeurs thermiques à paroi refroidie par circulation de fluide comme par exemple des éléments de parois de tuyère de propulseur fusée ou des éléments de parois de chambre de combustion de turbines à gaz, ou encore des éléments de parois de chambre de confinement de plasma dans un réacteur de fusion nucléaire.

La figure 13 illustre un exemple d'échangeur thermique 200 qui comprend une paroi chaude et une paroi refroidie respectivement formées par deux panneaux 210 et 220 composés de la structure selon l'invention. Les panneaux 210 et 220 sont couplés par un conducteur thermique 230, en matériaux composite C/C par exemple, qui est fixé sur les panneaux par brasage. Conformément à la structure de l'invention, chaque panneau 210, respectivement 220, comprend une âme poreuse 215, respectivement 225, en sandwich entre deux couches intermédiaires 216a et 216 b, respectivement 226a et 226b, et deux peaux en céramique 217a et 217b, respectivement 227a et 227b. Grâce à l'étanchéité et à la bonne tenue en température du matériau, la source de chaleur peut être confinée par le panneau 210 tandis qu'un fluide de refroidissement circule en paroi du panneau 220. On obtient ainsi des échangeurs thermiques légers et performants.

En outre du dépôt de céramique qui forme les peaux externes de la structure selon l'invention, d'autres dépôts spécifiques peuvent être réalisés suivants les applications envisagées. Par exemple, des revêtements réfléchissants à base de métaux ou des revêtements encore plus durs que la céramique, comme du diamant, peuvent être déposés sur la structure de l'invention.

## Revendications

1. Structure composite thermostructurale à gradient de composition **caractérisée en ce qu'**elle est formée en partie d'une âme poreuse (5) en matériau réfractaire ayant un taux volumique de porosité supérieur ou égal à 80%, ladite âme étant située entre deux couches intermédiaires (6a, 6b) comprenant une partie du matériau réfractaire, une phase céramique et une charge solide réfractaire, deux peaux extérieures en céramique (7a, 7b) recouvrant lesdites couches Intermédiaires, et **en ce que** les couches intermédiaires forment chacune une barrière entre l'âme poreuse (5) et les peaux extérieures en céramique (7a, 7b) et présentent un gradient de composition dans le sens de l'épaisseur de la structure, et **en ce que** les couches intermédiaires et l'âme poreuse, d'une part, et les peaux en céramique et lesdites couches intermédiaires, d'autre part, s'interpénètrent partiellement de manière à ancrer les couches intermédiaires dans l'âme poreuse et les peaux en céramique dans les couches intermédiaires.

2. Structure selon la revendication 1, **caractérisée en ce que** le matériau réfractaire de l'âme poreuse (5) est constitué d'un renfort en fibres réfractaire consolidé par une matrice.

3. Structure selon la revendication 2, **caractérisée en ce que** le renfort comprend des fibres de carbone de type ex-rayonne liées entre elles par une matrice carbone.

4. Structure selon l'une quelconque des revendications 1 à 3, **caractérisée en ce qu'**elle présente une densité apparente inférieure à 1.

5. Structure selon l'une quelconque des revendications 1 à 4, **caractérisée en ce qu'**elle comprend une pluralité d'alvéoles (2) dont les parois forment des raidisseurs (3).

6. Structure selon la revendication 5, **caractérisée en ce que** les raidisseurs ont une épaisseur de paroi allant jusqu'à 1 mm.

7. Structure selon la revendication 5 ou 6, **caractérisée en ce que** les raidisseurs (3) présentent des portions évidées (8).

8. Structure selon l'une quelconque des revendications 5 à 7, **caractérisée en ce qu'**elle comprend une surface optique intégralement formée avec les raidisseurs.

9. Structure selon l'une quelconque des revendications 1 à 8, **caractérisée en ce que** la céramique est composée de carbure de silicium.

10. Procédé de fabrication d'une structure composite thermostructurale à gradient de composition selon les revendications 1-9 comprenant les étapes suivantes:
a) usinage d'une préforme dans une pièce de matériau réfractaire poreux, la préforme ayant un taux volumique de porosité supérieur ou égale à 80%,
b) application sur toutes les surfaces accessibles de la préforme d'une composition liquide contenant un polymère précurseur de céramique et une charge solide réfractaire sous forme de poudre, réticulation du polymère et transformation du polymère réticulé en céramique par traitement thermique pour réduire la porosité à la surface de la préforme,
c) formation d'un dépôt de céramique par infiltration chimique en phase vapeur de manière à former une peau de céramique sur toutes les surfaces externes de la préforme.

11. Procédé selon la revendication 10, **caractérisé en ce que** la préforme est formée d'un renfort de fibres de carbone de type ex-rayonne consolidé par une matrice carbone.

12. Procédé selon la revendication 10 ou 11, **caractérisé en ce que** l'étape a) d'usinage de la préforme comprend l'évidement d'alvéoles (2) dans la pièce en matériau composite pour former des raidisseurs.

13. Procédé selon la revendication 12, caractérisé en ce l'étape d'usinage de la préforme comprend en outre la formation d'une surface sensiblement plane (4), ladite surface étant polie après l'étape d'infiltration chimique en phase vapeur pour former une surface optique.

14. Procédé selon l'une quelconque des revendications 10 à 13, **caractérisé en ce que** la composition liquide comprend un solvant du polymère précurseur de céramique.

15. Procédé selon l'une quelconque des revendications 10 à 14, **caractérisé en ce que** la charge solide comprend au moins une poudre réfractaire dont la granulométrie moyenne est inférieure à 100 microns.

16. Procédé selon la revendication 15, **caractérisé en ce que** la granulométrie moyenne de la poudre est comprise entre 5 microns et 50 microns.

17. Procédé selon l'une quelconque des revendications 10 à 16, **caractérisé en ce que** la charge solide comprend au moins deux poudres de granulométries moyennes différentes.

18. Procédé selon l'une quelconque des revendications 10 à 17, **caractérisé en ce que** l'infiltration chimique en phase vapeur est réalisée à température constante.

19. Procédé selon l'une quelconque des revendications 10 à 18, **caractérisé en ce que** le dépôt formé par infiltration chimique en phase vapeur est du carbure de silicium.

## Patentansprüche

1. Hochtemperaturbeständige Verbundstruktur mit Zusammensetzungsgradient, **dadurch gekennzeichnet, dass** sie teilweise von einem porösen Kern (5) aus feuerfestem Material mit einem Porositätsvolumenanteil größer als oder gleich 80 % gebildet ist, wobei der Kern zwischen zwei Zwischenschichten (6a, 6b), die einen Teil des feuerfesten Materials, eine Keramikphase und eine feuerfeste feste Ladung umfassen, gelegen ist, wobei zwei Außenhäute aus Keramik (7a, 7b) die Zwischenschichten bedecken, und dass die Zwischenschichten jeweils eine Barriere zwischen dem porösen Kern (5) und den Keramikaußenhäuten (7a, 7b) bilden und einen Zusammensetzungsgradienten in der Richtung der Dicke der Struktur aufweisen, und dass die Zwischenschichten und der poröse Kern einerseits sowie die Keramikhäute und die Zwischenschichten andererseits sich teilweise gegenseitig durchsetzen, um die Zwischenschichten in dem porösen Kern und die Keramikhäute in den Zwischenschichten zu verankern.

2. Struktur nach Anspruch 1, **dadurch gekennzeichnet, dass** das feuerfeste Material des porösen Kerns (5) von einer feuerfesten Faserverstärkung, die durch eine Matrix verfestigt ist, gebildet ist.

3. Struktur nach Anspruch 2, **dadurch gekennzeichnet, dass** die Verstärkung Kohlenstofffasern vom Typ Ex-Rayon umfasst, die durch eine Kohlenstoffmatrix untereinander verbunden sind.

4. Struktur nach einem der Ansprüche 1 bis 3, **dadurch gekennzeichnet, dass** sie eine scheinbare Dichte von weniger als 1 aufweist.

5. Struktur nach einem der Ansprüche 1 bis 4, **dadurch gekennzeichnet, dass** sie eine Vielzahl von Zellen (2) umfasst, deren Wände Versteifungen (3) bilden.

6. Struktur nach Anspruch 5, **dadurch gekennzeichnet, dass** die Versteifungen eine Wanddicke von bis zu 1 mm aufweisen.

7. Struktur nach Anspruch 5 oder 6, **dadurch gekennzeichnet, dass** die Versteifungen (3) ausgesparte Abschnitte (8) aufweisen.

8. Struktur nach einem der Ansprüche 5 bis 7, **dadurch gekennzeichnet, dass** sie eine mit den Versteifungen integral ausgebildete optische Fläche umfasst.

9. Struktur nach einem der Ansprüche 1 bis 8, **dadurch gekennzeichnet, dass** die Keramik aus Siliziumkarbid besteht.

10. Verfahren zur Herstellung einer hochtemperaturbeständigen Verbundstruktur mit Zusammensetzungsgradient nach den Ansprüchen 1 bis 9, das die folgenden Schritte umfasst:
a) Bearbeiten eines Vorformlings aus einem Teil aus porösem feuerfestem Material, wobei der Vorformling einen Porositätsvolumenanteil größer als oder gleich 80 % aufweist,
b) Aufbringen, auf alle zugänglichen Flächen des Vorformlings, einer flüssigen Zusammensetzung, die ein Keramik-Vorläuferpolymer sowie eine feuerfeste feste Ladung in Form von Pulver enthält, Vernetzen des Polymers und Umwandeln des vernetzten Polymers in Keramik durch Wärmebehandlung, um die Porosität an der Oberfläche des Vorformlings zu verringern,
c) Bilden einer Keramikabscheidung durch chemische Gasphaseninfiltration, um eine Keramikhaut auf allen Außenflächen des Vorformlings zu bilden.

11. Verfahren nach Anspruch 10, **dadurch gekennzeichnet, dass** der Vorformling von einer Verstärkung aus Kohlenstofffasern vom Typ Ex-Rayon, die durch eine Kohlenstoffmatrix verfestigt ist, gebildet ist.

12. Verfahren nach Anspruch 10 oder 11, **dadurch gekennzeichnet, dass** der Schritt a) der Bearbeitung des Vorformlings das Aussparen von Zellen (2) in dem Verbundwerkstoffteil, um Versteifungen zu bilden, umfasst.

13. Verfahren nach Anspruch 12, **dadurch gekennzeichnet, dass** der Schritt der Bearbeitung des Vorformlings ferner das Ausbilden einer im Wesentlichen ebenen Fläche (4) umfasst, wobei die Fläche nach dem Schritt der chemischen Gasphaseninfiltration poliert wird, um eine optische Fläche zu bilden.

14. Verfahren nach einem der Ansprüche 10 bis 13, **dadurch gekennzeichnet, dass** die flüssige Zusammensetzung ein Lösungsmittel des Keramik-Vorläuferpolymers umfasst.

15. Verfahren nach einem der Ansprüche 10 bis 14, **dadurch gekennzeichnet, dass** die feste Ladung wenigstens ein feuerfestes Pulver umfasst, dessen mittlere Korngröße kleiner als 100 Mikron ist.

16. Verfahren nach Anspruch 15, **dadurch gekennzeichnet, dass** die mittlere Korngröße des Pulvers zwischen 5 Mikron und 50 Mikron liegt.

17. Verfahren nach einem der Ansprüche 10 bis 16, **dadurch gekennzeichnet, dass** die feste Ladung wenigstens zwei Pulver mit unterschiedlichen mittleren Korngrößen umfasst.

18. Verfahren nach einem der Ansprüche 10 bis 17, **dadurch gekennzeichnet, dass** die chemische Gasphaseninfiltration bei konstanter Temperatur durchgeführt wird.

19. Verfahren nach einem der Ansprüche 10 bis 18, **dadurch gekennzeichnet, dass** die durch chemische Gasphaseninfiltration gebildete Abscheidung Siliziumkarbid ist.

## Claims

1. A thermostructural composite structure having a compositional gradient, formed from a porous core (5) made of a refractory having a pore volume content of greater than or equal to 80%, said core lying between two intermediate layers (6a, 6b) comprising part of a refractory, a ceramic phase and a refractory solid filler, two external shells (7a, 7b) made of ceramic covering said intermediate layers, and in that the intermediate layers each form a barrier between the porous core (5) and the external ceramic shells (7a, 7b), and present a compositional gradient in the direction of the thickness of the structure, the intermediate layers and the porous core, on the one hand, and the ceramic shells and said intermediate layers, on the other, partly interpenetrate so as to anchor the intermediate layers in the porous core and the ceramic shells in the intermediate layers.

2. The structure as claimed in claim 1, wherein the refractory of the porous core (5) consists of a refractory fiber reinforcement consolidated by a matrix.

3. The structure as claimed in claim 2, wherein the reinforcement comprises carbon fibers of the ex-rayon type bonded together by a carbon matrix.

4. The structure as claimed in any one of claims 1 to 3, which has a bulk density of less than 1.

5. The structure as claimed in any one of claims 1 to 4, which includes a number of cavities (2), the walls of which form stiffeners (3).

6. The structure as claimed in claim 5, wherein the stiffeners have a wall thickness ranging up to 1 mm.

7. The structure as claimed in claim 5 or 6, wherein the stiffeners (3) have hollowed-out portions (8).

8. The structure as claimed in any one of claims 5 to 7, which includes at least one optical surface integrally formed with the stiffeners.

9. The structure as claimed in any one of claims 1 to 8, wherein the ceramic is composed of silicon carbide.

10. A process for manufacturing a thermostructural composite structure having a compositional gradient as claimed in any one of claims 1 to 9, comprising the following steps:
a) machining of a preform in a porous refractory component, the preform having a pore volume content of greater than or equal to 80%;
b) application of a liquid composition, containing a ceramic precursor polymer and a refractory solid filler, to all the accessible surfaces of the preform, crosslinking of the polymer and conversion of the crosslinked polymer into a ceramic by heat treatment in order to reduce the porosity at the surface of the preform; and
c) formation of a ceramic coating by chemical vapor infiltration so as to form a ceramic shell over all the external surfaces of the preform.

11. The process as claimed in claim 10, wherein the preform is formed from a reinforcement of carbon fibers of the ex-rayon type, consolidated by a carbon matrix.

12. The process as claimed in claim 10 or 11, wherein step a) of machining the preform includes the hollowing-out of cavities (2) in the component made of composite in order to form stiffeners.

13. The process as claimed in claim 12, wherein the step of machining the preform furthermore includes the formation of a substantially plane surface (4), said surface being polished after the chemical vapor infiltration step in order to form an optical surface.

14. The process as claimed in any one of claims 10 to 13, wherein the liquid composition includes a solvent of the ceramic precursor polymer.

15. The process as claimed in any one of claims 10 to 14, wherein the solid filler comprises at least one refractory powder whose mean particle size is less than 100 µm.

16. The process as claimed in claim 15, wherein the mean particle size of the powder lies in the range 5 µm to 50 µm.

17. The process as claimed in any one of claims 10 to 16, wherein the solid filler comprises at least two powders of different mean particle sizes.

18. The process as claimed in any one of claims 10 to 17, wherein the chemical vapor infiltration is carried out at a constant temperature.

19. The process as claimed in any one of claims 10 to 18, wherein the coating formed by chemical vapor infiltration is of silicon carbide.
